Europäisches Patentamt

European Patent Office

Office européen des brevets

(11) Veröffentlichungsnummer: **0 116 831**
**B1**

(12) **EUROPÄISCHE PATENTSCHRIFT**

(45) Veröffentlichungstag der Patentschrift:
**10.12.86**

(21) Anmeldenummer: **84100189.4**

(22) Anmeldetag: **10.01.84**

(51) Int. Cl.⁴: **B 21 B 37/00,** H 02 P 5/06,
G 05 D 13/62

(54) **Elektrische Regelungsanordnung für einen Walzenantriebsmotor eines Rohrwalzwerkes.**

(30) Priorität: **24.01.83 DE 3302222**

(43) Veröffentlichungstag der Anmeldung:
**29.08.84 Patentblatt 84/35**

(45) Bekanntmachung des Hinweises auf die Patenterteilung:
**10.12.86 Patentblatt 86/50**

(84) Benannte Vertragsstaaten:
**DE FR GB IT SE**

(56) Entgegenhaltungen:
**DE - A - 2 326 115**
**DE - A - 2 332 570**
**DE - A - 2 750 782**
**DE - B - 1 302 903**

**Hersteller von Rohren, Verlag Stahleisen MBH,**
**Düsseldorf (1975), Seiten 28-37**

(73) Patentinhaber: **Siemens Aktiengesellschaft Berlin und**
**München, Wittelsbacherplatz 2, D-8000 München 2 (DE)**

(72) Erfinder: **Richter, Walter, Am Bach 29, D-8520 Erlangen**
**(DE)**

## Beschreibung

Die Erfindung betrifft eine elektrische Regelungsanordnung für die Regelung eines Walzenantriebsmotors eines Rohrwalzenwerkes zur Herstellung von Hohlblöcken.

Solche Hohlblöcke (Luppen) sind das Grundmatrial für einen anschliessenden Walzvorgang, der den Hohlblock zu einem Fertig-/Halbfertigrohr ausstreckt. Zur Herstellung eines solchen Hohlblocks wird ein Stahlblock mit Hilfe des sogenannten Schrägwalzenverfahrens über einen Dorn gewalzt. Dabei handelt es sich um einen Walzvorgang, bei dem ein warmer Stahlblock zwischen zueinander geneigt stehenden Walzen mit gleichem Drehsinn in eine Drehbewegung mit axialem Vorschub versetzt wird. Mit Hilfe von Führungsrollen oder Führungslinealen wird der Block zwischen den Walzen gehalten. Etwa in der Zentralachse dieses Systems ist ein Dorn angeordnet, der mit seiner Spitze etwa bis zur halben Walzenlänge in den Walzspalt hineinragt. Auf diese Weise wird im Verlauf des Walzvorganges der Block über den Dorn gewalzt, so dass am Ende ein Hohlblock (Flasche) entsteht, der als Ausgangsmaterial für das nachfolgende Rohrwalzen dient. Ein solches Walzverfahren ist in dem Buch «Herstellung von Rohren», erschienen im Verlag Stahleisen M.B.H., Düsseldorf (1975), Seiten 28 bis 37 näher beschrieben.

Nun sind Walzenantriebsmotoren bei Walzwerken auch der vorbeschriebenen Art üblicherweise mit einer Drehzahlregelung ausgestattet, wie sie etwa in der Siemens-Zeitschrift 45 (1971), Heft 4, Seiten 183 und 184 beschrieben ist. Drehzahlregelungssysteme dieser Art können mit konstantem Sollwert aber auch mit nach bestimmten Parametern veränderbaren Sollwerten etwa mit einem für ein optimales Walzen günstigen Drehzahlverlauf betrieben werden, wie dies etwa in der DE-AS 1 302 903 beschrieben ist.

Nun kommt es bei Rohrwalzwerken der vorbeschriebenen Art, abhängig von den Eigenschaften des jeweils gewählten Materials, bei der Hohlraumbildung vor der Dornspitze zur Bildung von radialen Rissen. Übersteigen diese Risse ein bestimmtes Mass, muss die Luppe verschrottet werden. Bei festen Drehzahl-Sollwerten kann die Rissbildung durch unterschiedliche Temperaturen, Chargenwechsel oder Inhomogenitäten des Materials eine unzulässige Grösse annehmen. Eine genaue Anpassung des jeweiligen Drehzahl-Sollwertes an diese verschiedenen Parameter würde zu sehr komplizierten und schlecht handhabbaren Solldrehzahl-Steuerungssystemen führen.

Der Erfindung liegt die Aufgabe zugrunde, der vorbeschriebenen materialabhängigen Rissbildung durch Beeinflussung der elektrischen Regelungsanordnung für den Walzenantriebsmotor auf einfache Weise selbsttätig entgegenzuwirken.

Diese Aufgabe wird durch die im Patentanspruch 1 angegebene Erfindung gelöst. Dadurch ist erreicht, dass, ausgehend von einer Drehzahlregelung durch deren Ablösung von einer das Drehmoment und damit die Drehzahl beeinflussenden Leistungsregelung von Fall zu Fall eine auch die Materialbeschaffenheit berücksichtigende Regelungsanordnung ohne grösseren Mehraufwand verwirklicht werden kann.

In einer Weiterbildung der Erfindung gemäss Patentanspruch 2 besteht die Möglichkeit, die Grundeinstellung der Leistung durch Beeinflussung des jeweiligen Leistungs-Sollwertes an die Art des Ausgangsmaterials anzupassen.

Weitere Einzelheiten der Erfindung werden anhand des im folgenden beschriebenen Ausführungsbeispiels näher erläutert.

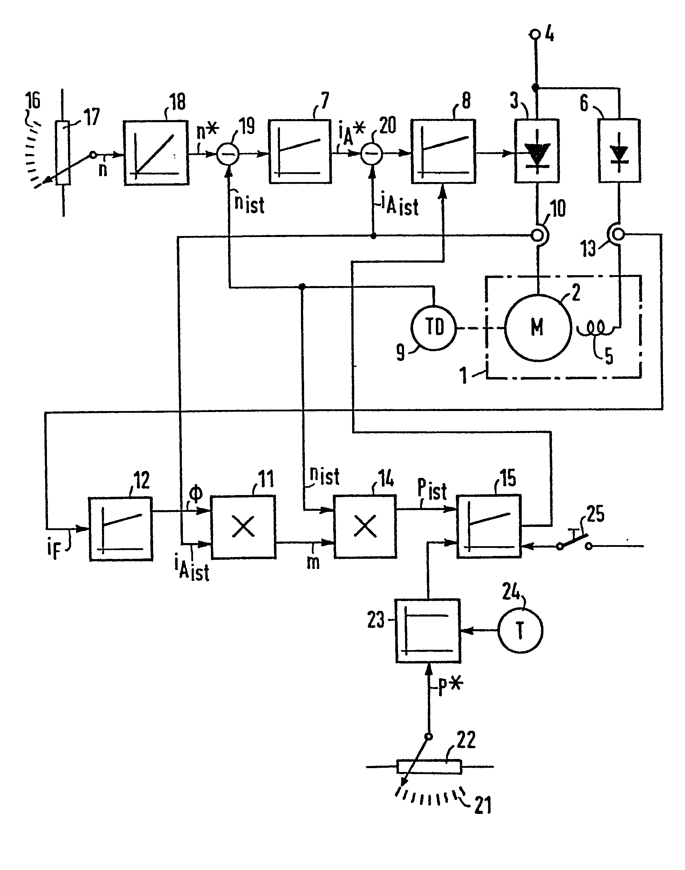

Die in der Figur schematisch dargestellte und nur mit den wichtigsten Komponenten versehene Regelungsanordnung für den Walzenantriebsmotor 1 mit dem Anker 2, der über einen Thyristorgleichrichter 3 mit dem Netz 4 verbunden ist und der Feldwicklung 5, die über den Gleichrichter 6 ebenfalls aus dem Netz 4 gespeist ist, besteht aus einem Regelungssystem für die Konstanthaltung der Drehzahl und einem zusätzlichen dieses ablösenden Regelungssystems für die Konstanthaltung der Motorleistung.

Das Regelungssystem für die Konstanthaltung der Drehzahl besteht aus dem Drehzahlregler 7, dem nachgeschalteten Stromregler 8, dem Stromwandler 10 für die Messung des Ankerstrom-Istwertes und dem Tachogenerator 9 für die Messung der Ist-Drehzahl des Motors 1. Diese Komponenten dienen in bekannter Weise zur Konstanthaltung der Motordrehzahl unabhängig vom Walzgut und den sonstigen Walzbedingungen. Diese Konstanthaltung der Motordrehzahl und damit der Walzendrehzahl ist indessen bei Rohrwalzenwerken, wie bereits ausgeführt, nicht immer von Vorteil. Das im folgenden beschriebene zusätzliche und das Drehzahl-Regelungssystem von Fall zu Fall ablösende Regelungssystem für die Konstanthaltung der Motorleistung ist in der Lage, die Motordrehzahl in der gewünschten Weise an die jeweilige Materialbeschaffenheit anzupassen. Dazu ist von dem formelmässigen Zusammenhang $P = m \cdot n$ und $m = i_A \cdot \phi$ ausgegengen. Darin bedeuten:

$P$ = Motorleistung
$m$ = Motordrehmoment
$n$ = Motordrehzahl
$i_a$ = Ankerstrom des Motors
$\phi$ = Feldstärke des Motors.

Daraus ergibt sich, dass bei einem höheren geforderten Drehmoment, etwa durch ein relativ zähes Material, und konstantgehaltener Drehzahl, die Motorleistung entsprechend dem obigen Zusammenhang proportional erhöht werden müsste. Wenn nun umgekehrt die Regelungsanordnung derart arbeitet, dass nicht die Drehzahl, sondern die Leistung konstant gehalten wird, ergibt sich daraus eine entsprechend lineare Verminderung der Drehzahl.

Gemäss der erfinderischen Erkenntnis, dass eine solche Massnahme in überraschender Weise geeignet ist, die Drehzahl an die Eigenschaften, etwa die Zähigkeit des jeweils zu walzenden Materials derart anzupassen, dass die Rissbildung in der gewünschten Weise vermieden wird, ist dem Drehzahlregelungssystem ein dieses von Fall zu Fall ablösendes Leistungsregelungsystem zugeordnet. Dieses besteht aus dem Multiplikator 11 zur Ermittlung des Drehmomentes m aufgrund des Ankerstromes $i_A$

und der vom Funktionsglied 12 ermittelten Grösse der Feldstärke φ aus der mit Hilfe des Stromwandlers 13 gemessenen Grösse des Feldstromes $i_F$, dem weiteren Multiplikator 14 zur Ermittlung der Istleistung des Motors aus der vom Multiplikator 11 ermittelten Grösse für das Drehmoment und dem vom Tachogenerator 9 gelieferten Wert für die Ist-Drehzahl sowie dem Funktionsregler 15, der aus dem vom Multiplikator 14 ermittelten Leistungs-Istwert und dem Leistungs-Sollwert eine dem Stromregler 8 zugeführte Grösse für die Drehzahlkorrektur im Sinne einer der Solleistung entsprechenden korrigierten Drehzahlgrösse bildet.

Zur Erläuterung der Funktion der Regelungsanordnung soll zunächst das Regelungssystem für die Drehzahlregelung beschrieben werden. Dabei wird ausgegangen von der Vorwahl der Grundgrösse für die Solldrehzahl n* an der Einstellskala 16 des Potentiometers 17. Diese Grösse wird dem Funktionsregler 18 zugeführt, der die Aufgabe hat, den gewünschten Drehzahl-Sollwert nach einer vorgewählten Funktion hochzusteuern.

Der dabei gebildete Drehzahl-Sollwert wird einem Vergleichsglied 19 zugeführt, das aus diesem Sollwert und dem vom Tachogenerator 9 gelieferten Istwert der Drehzahl einen Differenzwert ermittelt, der dem Drehzahlregler 7 als Eingangsgrösse zugeführt wird. Dieser beinhaltet ein Funktionsglied, welches aus der Eingangsgrösse eine dem Sollwert für den Ankerstrom $i_A$* des Motors entsprechende Stellgrösse ermittelt. Diese wird einem weiteren Vergleichsglied 20 zugeführt, das aus dem letztgenannten Wert und dem vom Stromwandler 10 gelieferten Istwert des Ankerstroms einen Differenzwert bildet, der dem Stromregler 8 als Eingangsgrösse zugeführt ist. Dieser erzeugt eine Stellgrösse, die den Ankerstrom mit Hilfe des Thyristorgleichrichters 3 in Sinne einer Konstanthaltung der Motordrehzahl n beeinflusst. Dieses Regelungssystem ist bekannt.

Um nun gemäss der vorliegenden Erfindung dieses Regelungssystem für die Konstanthaltung der Drehzahl im Bedarfsfalle von einem Regelungssystem für die Konstanthaltung der Motorleistung abzulösen, wird an der Skala 21 des Potentiometers 22 zunächst ein Leistungs-Sollwert P* als Grundgrösse vorgewählt. Diese gelangt an einen weiteren Funktionsregler 23, der den gewählten Leistungs-Sollwert etwa aufgrund des von einem Temperaturfühler 24 gelieferten Wertes korrigiert. Um die Leistungsistgrösse zu bilden, wird dem Funktionsglied 12 der Wert des vom Stromwandler 13 ermittelten Wertes für den Feldstrom $i_F$ als Eingangsgrösse zugeführt und daraus der Wert für die Feldstärke φ errechnet. Dieser gelangt zusammen mit dem vom Stromwandler 10 kommenden Istwert für den Ankerstrom $i_{A\,ist}$ an den Multiplikator 11. Dieser bildet aus der genannten Eingangsgrösse einen dem Istwert des Motordrehmomentes m entsprechenden Wert, der im Multiplikator 14 mit dem vom Tachogenerator 9 gelieferten Wert für die Istdrehzahl des Motors multipliziert wird, so dass ein der Istleistung $P_{ist}$ des Motors entsprechender Wert entsteht. Dieser wird im Leistungsregler 15 mit dem vom Funktionsglied 23 kommenden Wert für die Solleistung P* des Motors verglichen und daraus ein Sollwert gebildet, der im Falle der Freigabe durch die Betätigung des Schalters 25 dem Stromregler 8 zugeführt wird.

Auf diese Weise ist erreicht, dass sich ein von den Materialparametern abhängiges beispielsweise höheres Drehmoment durch die konstantgehaltene Leistung, wie gewünscht, in eine niedrigere Motor- und damit Walzendrehzahl umsetzen lässt.

**Patentansprüche**

1. Elektrische Regelungsanordnung für die Regelung eines Walzenantriebsmotors für Rohrwalzenwerke zur Herstellung von Hohlblöcken, dadurch gekennzeichnet, dass die Anordnung aus zwei Regelungssystemen gebildet ist, von denen eines als Drehzahlregler (7, 8, 9, 10, 16, 17, 18, 19, 20) zur Konstanthaltung der Drehzahl des Walzenantriebsmotors (1) und das andere Regelungssystem als Leistungsregler (11, 12, 13, 14, 15, 23, 24) zur Konstanthaltung der elektrischen Leistung des Walzenantriebsmotors (1) ausgebildet ist, der aus dem durch Multiplikation des gemessenen Ankerstromwertes mit der aus dem gemessenen Wert des Feldstromes gebildeten, der Feldstärke entsprechenden Grösse das Motordrehmoment und aus dessen Multiplikation mit der Motordrehzahl den Istwert der Motorleistung ermittelt und durch Vergleich mit einem wählbaren Leistungs-Sollwert eine Stellgrösse für die Steuerung des Ankerstroms des Motors im Sinne einer konstanten Motorleistung bildet und ein Schalter (25) vorhanden ist, durch dessen Betätigung das Regelungssystem für die Leistungsregelung zur Ablösung des Regelungssystems für die Drehzahlregelung einschaltbar ist.

2. Regelungsanordnung nach Anspruch 1, dadurch gekennzeichnet, dass dem Leistungsregler (15) zur Korrektur des Leistungs-Sollwertes in Abhängigkeit von der Art des jeweils zu walzenden Materials ein Sollwertgeber (21, 22) zugeordnet ist.

**Claims**

1. An electrical control device for the control of a roller drive motor of a pipe rolling mill for the production of hollow blocks, characterised in that there are two control systems, one designed as a speed regulator (7, 8, 9, 10, 16, 17, 18, 19, 20) for keeping the speed of the roller drive motor (1) constant, and the other control system designed as a power regulator (11, 12, 13, 14, 15, 23, 24) for keeping the electrical power of the roller drive motor (1) constant so as to determine the engine torque from multiplication of the measured armature current value with the magnitude formed from the measured value of the field current, which corresponds to the field strength, and so determines the actual value from the multiplication of said engine torque with the engine speed, and by comparison with a selectable theoretical power value forms a setting magnitude for the control of the armature current of the motor in accordance with a constant motor output, and switch (25) is arranged whose actuation enables the control system for the power regulation to be switched on in order to supersede the control system for the speed regulation.

2. A control device as claimed in claim 1, characterised in that a theoretical value generator (21, 22) is assigned to the power regulator (15) to correct the respective theoretical power value in dependance upon the type of the material to be rolled.

## Revendications

1. Dispositif de régulation électrique servant à réaliser la régulation d'un moteur d'entraînement des cylindres pour des laminoirs à tubes, pour la fabrication de blocs creux, caractérisé par le fait que le dispositif est constitué par deux systèmes de régulation, dont l'un est réalisé sous la forme d'un régulateur (7, 8, 9, 10, 16, 17, 18, 19, 20) de la vitesse de rotation, servant à maintenir constante la vitesse de rotation du moteur (1) d'entraînement des cylindres, et dont l'autre est réalisé sous la forme d'un régulateur de puissance (11, 12, 13, 14, 15, 23, 24) servant à maintenir constante la puissance électrique du moteur (1) d'entraînement des cylindres et qui détermine, par multiplication de l'intensité du courant d'induit désiré par la grandeur formée par la valeur mesurée du courant d'induit et correspondant à l'intensité de champ, le couple de rotation du moteur et qui détermine, à partir de la multiplication de ce couple par la vitesse de rotation du moteur, la valeur réelle de la puissance de ce dernier et forme, par comparaison à une valeur de consigne de puissance pouvant être sélectionnée, une grandeur de réglage pour la commande du courant d'induit du moteur dans le sens de l'obtention d'une puissance constante de ce dernier, et qu'il est prévu un commutateur (25) dont l'actionnement permet de brancher le système de régulation pour le réglage de la puissance en remplacement du système de régulation de la vitesse de rotation.

2. Dispositif de régulation suivant le revendication 1, caractérisé par le fait qu'un générateur de valeurs de consigne (21, 22) est associé au régulateur de puissance (15) pour réaliser la correction de la valeur de consigne de la puissance en fonction du type du matériau devant être respectivement laminé.